# EUROPEAN PATENT SPECIFICATION

(11) **EP 1 971 140 B1**
(45) Date of publication and mention of the grant of the patent: **11.05.2016**
(21) Application number: 07005311.1
(22) Date of filing: 14.03.2007
(51) Int. Cl.: H04N 5/44

(54) **System and method for receiving and processing broadcasted signals comprising multiple recievers**
System und Verfahren zum Empfangen und Verarbeiten von Rundfunksignalen mit mehreren Empfängern
Système et procédé pour la réception et le traitement de signaux diffusés comprenant plusieurs récepteurs

(43) Date of publication of application: 17.09.2008
(73) Proprietor: Alpine Electronics, Inc., Tokyo (JP)
(72) Inventor: Sofariu, Stefan, 70567 Stuttgart (DE); Wittig, Dirk, 70567 Stuttgart (DE)
(74) Representative: Klunker . Schmitt-Nilson . Hirsch

(56) References cited:
- WO-A-00/70868
- JP-A- 2005 117 226
- US-A1- 2006 033 846
- US-A1- 2007 011 719

## Description

### Background of the Invention

### Field of the Invention

The present invention is directed to a system for receiving and processing broadcasted signals comprising a first receiver for receiving at least a broadcasted first signal and a second receiver for receiving at least a broadcasted second signal, and an output unit for outputting at least one output signal. A processing unit is coupled between the first receiver and the second receiver, and the output unit, respectively, for processing either one or both of the first signal and the second signal and for transmitting at least one processed signal to the output unit. The invention is further directed to a method for receiving and processing broadcasted signals. The broadcasted signals may include particularly information about contents being broadcasted on a signal channel from an external information provider, such as an internet or television provider broadcasting or transmitting signals via wireless transmission. The system and method can be used particularly in a mobile environment, such as in an automotive environment.

### Description of the Related Art

Generally, a system for receiving and processing broadcasted signals may be a mobile communication terminal configured for receiving multimedia information or data while an user is travelling. In one type of such system, multiple receivers may be installed such as a first receiver for receiving at least a broadcasted first signal and a second receiver for receiving at least a broadcasted second signal, wherein the first receiver and second receiver may receive the first signal and second signal having different content corresponding to a respective broadcast channel. For example, one of the receivers may be tuned for receiving a TV broadcast channel, whereas another one of the receivers may be tuned for receiving a broadcasted signal having data content provided, e. g., by an internet provider. According to another example, the other one of the receivers may be tuned to another TV broadcast channel receiving, for example, EPG information related to that TV broadcast channel, whereas the user may watch the TV program received by the first receiver broadcasted on the respective broadcast channel. In this way, the user may have access to different content on different broadcast channels, and may have also access to information which is broadcasted on a respective signal channel, such as EPG.

In modern automotive systems, there are often installed multiple automotive infotainment applications such as a TV or an internet access terminal which may be used for accessing a respective information provider such as a digital broadcasting or internet provider. Using the above mentioned broadcasting and information services, the user such as the driver or passenger in a vehicle can watch various multimedia broadcasts and/or information on multiple channels through the system of receivers as mentioned above, which is installed in the vehicle and which is equipped with a corresponding receiving antenna while moving.

In JP 2005-117226 A there is described a digital broadcast receiver and method for acquiring channel information in which information of another channel can be acquired without disturbing a user viewing/listening to a program of a particular channel. During normal reception, a switching section connects a second receiving system with a synthesizer at a diversity synthesizing section where a baseband sigrial demodulated through a first receiving system is synthesized with a baseband signal demodulated through the second receiving system, thus performing diversity reception. When EPG display is designated by the user, the second receiving system is switched to another system acquiring service information and used for receiving the corresponding channel at the second receiving system while sustaining reproduction of a baseband signal demodulated through the first receiving system. Thus, the user may have access to EPG information through the second receiving system without disturbing reception of the program received through the first receiving system.

However, even when using the digital broadcast receiving system of JP 2005-117226 A, there may be the disadvantage that each of the different receivers may have a low reception condition, for example, when the mobile device is moved through a region where the broadcasted signals can be received only with a rather low reception quality, such as in a valley of a mountain region, or when the device is moved with high speed. In the above described system of the prior art, when the additional EPG information is received, the second receiving system is not available for the diversity reception which would be advantageous in such situation for increasing the reception quality.

In US 2007/0011719 A1 there is disclosed a method and an apparatus for providing television signals using system components as mentioned in the preamble of present claim 1. Particularly, this reference discloses methods and an apparatus for providing television signals by employing antenna diversity mechanisms and which are appropriate for supporting so called picture-in-picture (PIP) function. Signals from a first and second antenna according to first and second signal quality indicators are used to selectively produce only a main picture signal or the main picture signal together with a sub-picture signal.

### Summary of the Invention

It is therefore an object of the present invention to provide a system for receiving and processing broadcasted signals having multiple implemented receivers which is capable of improving the availability and reception quality of services received by the system according to current user's requirements. Further, it is an object of the present invention to provide a corresponding method for receiving and processing broadcasted signals.

The invention provides a system for receiving and processing broadcasted signals according to the features of claim 1. Moreover, the invention is directed to a method for receiving and processing broadcasted signals, the method comprising the steps as specified in claim 13. Embodiments and advantageous features thereof are indicated in the dependent claims.

Particularly, the invention provides a system for receiving and processing broadcasted signals, comprising a first receiver for receiving at least a broadcasted first signal and a second receiver for receiving at least a broadcasted second signal, and an output unit for outputting at least one output signal. A processing unit is coupled between the first and second receivers, and the output unit, respectively, for processing either one or both of the first and second signals and for transmitting at least one processed signal to the output unit. A user interface is coupled with the processing unit and is adapted for receiving user's instructions as to setting a priority of processing of the first signal or the second signal. The processing unit is further adapted for evaluating a signal quality of reception involved with the reception by any of the receivers, thereby determining at least one parameter for at least one of the first and second signal indicative for its quality of reception, and for comparing the at least-one parameter with at least one preset threshold value. The processing unit is further adapted for tuning the first receiver for receiving the first or second signal and for tuning the second receiver for receiving the first or second signal depending on the comparison and the user's priority setting.

According to the invention, the system for receiving and processing broadcasted signals involving the first receiver and second receiver being tuned depending on the comparison result and the user's priority setting, as mentioned above, is capable of improving the availability and the reception quality of different services received by the system according to current user's requirements even when the system is moved in a region where the signal quality of the broadcasted signals is rather low. Particularly, the invention is capable of implementing a particular management of the receiver resources in order to provide a reception of broadcasted information which is adapted to current user's requirement. With the invention, there may be provided a balance between keeping the reception at a high quality level and a maximum amount of available information, wherein the user can provide his or her current needs to the system by setting a corresponding priority which of the different services or signals is preferred for processing. With setting the priority, the user may select his or her preference for a particular broadcasted service.

According to an embodiment of the invention, the at least one parameter may be selected from at least one of a signal power, signal-to-noise ratio, error bit rate, and packet error rate, respectively derived from the first and second signal. Accordingly, the at least one threshold value is set to correspond with the particular selected parameter. The error bit rate and packet error rate may particularly be applied to digital broadcasted signals where the respective receivers include respective digital decoders and/or processors for determining such error bit rate and packet error rate of signals derived from the broadcasted signals.

In an embodiment of the invention, the processing unit may be adapted for performing the following steps: in the event that the at least one parameter determined for the first signal is greater than the at least one threshold, which is indicative for a rather good quality of reception, the first receiver is tuned for receiving the first signal, and the second receiver is tuned for receiving the second signal, achieving that both services are available to the user. On the other hand, in the event that the at least one parameter determined for the first signal is lower than the at least one threshold, which is indicative of a rather low quality of reception, and in the event that the priority of processing is set by the user for preferring the first signal, the first receiver is tuned for receiving the first signal and the second receiver is tuned for receiving also the first signal. In this way, the system may detect a rather low quality of reception for the first signal, and in the event that the user wants to have access to the service transmitted with the first signal, the system switches both the first receiver and the second receiver in a way that both receivers receive the first signal. In this way, both receivers may supply the first signal or any signal derived therefrom to the processing unit which may synthesize both received signals for performing diversity reception. Such resource management is performed particularly with respect to the user's priority setting, which is set in the present example for preferring the first signal, so that the user may be provided automatically with his or her preferred service received with the first signal even in the event of a rather low reception quality. In this way, the availability of the preferred service and its reception quality is improved automatically even in a region or at a time when the reception quality is rather low.

The principles of the present invention may be applied basically to any type of system for receiving and processing broadcasted signals having multiple receivers or receiver sections for receiving respective broadcasted signals installed therein. For example, the system may also include at least three or more receivers or receiver sections which are controlled and tuned by the processing unit according to the principles of the present invention. The broadcasted signals may be any type of signals, such as analog or digital signals, having a particular information content being broadcasted on one or multiple signal channels. Such broadcasted signals may be received from any kind of external information provider, such as a TV and/or radio broadcasting provider, and internet provider, or the like. Likewise, any of the receivers used in the system according to the invention may include, for example, a DVBT and/or DVBH tuner for receiving corresponding digital audio/video data signals. The receivers may additionally or alternatively include, for example, a device for accessing internet information, such as a modem for wireless communication, so that services received from both the DVBT or DVBH tuner and the internet access device may be provided at one time. Such services may be provided to the user at different displays used for the respective application, or may be provided to the user in a combined display mode displaying information such as a TV program or internet information on one display screen. According to the user's priority settings, the system may be adapted to provide such combined display mode, or may be adapted to provide, for example, only the TV program or the internet information on the display screen. In this way, the user may have access to different content on different broadcast channels, and may have also access to information which is broadcasted on a respective signal channel, such as EPG, teletext and MHP (multimedia home platform).

Further advantageous features and embodiments of the invention are evident from the dependent claims.

### Brief Description of the Drawings

The invention will now be explained in more detail by means of embodiments taken in conjunction with accompanying drawings, in which:
- Fig. 1: shows a schematical block diagram illustrating an embodiment of a system for receiving and processing broadcasted signals according to the invention;
- Fig. 2: shows a table illustrating an exemplary resource management scheme implemented in a system according to Fig. 1;
- Fig. 3: shows a table illustrating another exemplary resource management scheme implemented in a system according to Fig. 1;
- Fig. 4: shows a table illustrating another exemplary resource management scheme implemented in a system according to Fig. 1 involving at least three receivers for receiving a respective broadcasted signal;
- Fig. 5: shows a table illustrating another exemplary resource management scheme implemented in a system according to Fig. 1 where the user may set different priorities for the different broadcasted signals;
- Fig. 6: shows a table illustrating another exemplary resource management scheme implemented in a system according to Fig. 1 involving at least two thresholds affecting the resource management.

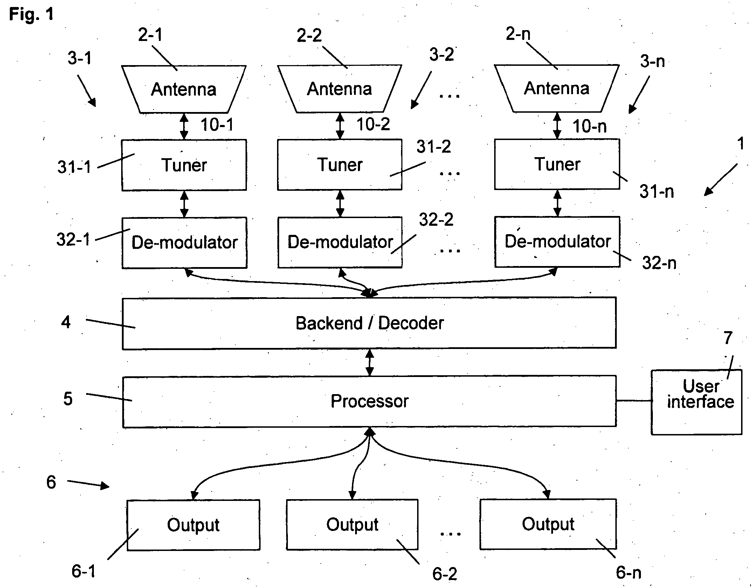

Fig. 1 shows a schematical block diagram illustrating an embodiment of a system for receiving and processing broadcasted signals according to the principles of the present invention. In the following, well-known function or constructions of the system and the individual components are not described in detail since they would obscure the invention in unnecessary detail. It will be understood by those of ordinary skill in the art how such components may be implemented in a system for performing the respective function, as described in the following description, wherein the person of ordinary skill in the art will understand that the present invention is not limited to the particular detailed descriptions.

According to Fig. 1, the system 1 comprises multiple receivers or receiver sections, generally designated at reference numerals 3-1 to 3-n. Each of the receivers 3-1 to 3-n may comprise multiple components or sections, such as respective tuners 31-1 to 31-n and associated de-modulators 32-1 to 32-n connected with each other as shown. Moreover, each of those receivers 3-1 to 3-n is connected to a respective antenna 2-1 to 2-n for receiving a respective broad-casted signal, for example having a particular frequency or baseband. Each of the signals 10-1 to 10-n received by receivers 3-1 to 3-n shall be understood as being any kind of signal transmitting a respective content of information or data being broadcasted on a respective signal channel. Particularly, the signals 10-1 to 10-n may be provided by one or multiple external information providers, such as a TV broadcasting provider and/or an internet provider.

The system 1 according to Fig. 1 further includes an output unit 6 which may comprise multiple output sections 6-1 to 6-n for outputting at least one or multiple output signals. For example, the output unit 6 may be coupled with a display and/or loudspeaker system for providing the respective received and processed information content, such as video or audio content, to the user. The system 1 according to Fig. 1 further includes a processing unit, which may include in the present embodiment multiple components such as a processor 5 and a backend/decoder device 4. The backend/decoder 4 and processor 5 forming the processing unit are coupled between the respective receivers 3-1 to 3-n and the output unit 6, respectively, for processing either one or any combination of the received signals 10-1 to 10-n and for transmitting at least one processed signal to the output unit. It will be appreciated by those skilled in the art that the different components shown in Fig. 1 may be implemented in a distributed or integrated manner, wherein also particular ones of the shown components may be combined into one unit or device, respectively.

In the particular embodiment of Fig. 1, the respective tuner 31-1 to 31-n is tuned to a specified signal frequency, e. g., for receiving a specific broadcast channel transmitted on that particular frequency. The respective de-modulator 32-1 to 32-n reads the quality of the analog signal received from the associated tuner and creates, in case of digital broadcasted signals, respective digital packets. In the present embodiment, the de-modulators 32-1 to 32-n do not perform a discrimination between different services transmitted on a particular channel. The de-modulators 32-1 to 32-n are coupled with the backend/decoder 4 which may perform the service discrimination using the received signals from any of the de-modulators. Such processed signals are transmitted to the processor 5 in which the particular resource management according to the principles of the present invention is implemented. Particularly, the processor 5 is adapted for evaluating a signal quality of reception involved with the reception by any of the receivers 3-1 to 3-n, wherein the processor 5 determines at least one parameter, as described in more detail below, for at least one of the received signals indicative for its quality of reception.

The processor 5 is further coupled with an input interface 7 which is generally adapted for receiving user's instructions as to setting a priority of processing of one of the received signals 10-1 to 10-n. In this way, the user may set a respective priority for communicating his or her particular preference for a particular service received with any one of the signals 10-1 to 10-n to the system 1. The user interface 7 may be part of a touch screen and/or a key panel having different keys or buttons for entering respective instructions to the system. The processor 5 in interaction with the backend/decoder 4 is further adapted for controlling the different components of the system, such as tuning the respective receivers 3-1 to 3-n for receiving a particular signal, such as a signal of a particular frequency or of a particular broadcast channel.

According to the present invention, the signal quality of reception involved with the reception by any of the receivers 3-1 to 3-n may be evaluated in various ways. For example, the processor 5 may evaluate the signal power of the respective received signal for determining at least one parameter significant for the quality of reception. Additionally or alternatively, the processor may also determine the field strength, the channel-to-noise or signal-to-noise ratio, an error bit rate, and/or a packet error rate derived from the respective received signal. In this way, there are several possibilities for evaluating the quality of reception of the respective signal which the skilled person may choose from and which the skilled person may implement in well-known manner. Such determined at least one parameter may be compared in the processor 5 with at least one corresponding preset threshold value, so that the system may determine, whether the signal quality of reception is higher or lower than a preset threshold value.

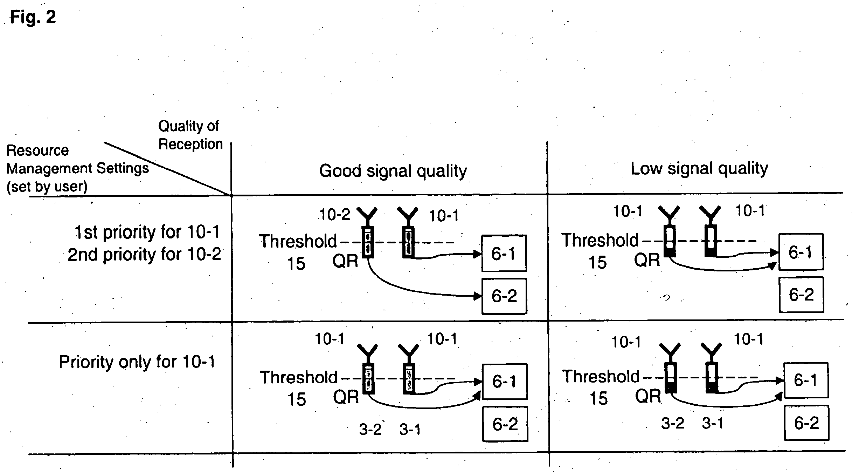

In the following, Figs. 2 to 6 are intended to illustrate various embodiments of resource management schemes implemented in processor 5 and are intended to provide further understanding of the invention with respect to the particular tuning and controlling of the receivers 3-1 to 3-n according to the principles of the invention. Figs. 2 to 6 illustrate exemplary embodiments of the invention which may be implemented in a system as illustrated in Fig. 1. However, the skilled person will appreciate that the resource management schemes as described below may also be implemented in different system configurations for receiving and processing broadcasted signals.

Fig. 2 shows a table illustrating an exemplary resource management scheme implemented in processor 5 of the system 1 according to Fig. 1. The table according to Fig. 1 schematically shows a first and second receiver 3-1, 3-2 as also referred to in Fig. 1 , respectively tuned for receiving signals 10-1 and 10-2. The table further shows schematically the processing and transmitting of the signals to a respective output section 6-1, 6-2, without showing the particular components coupled between the receivers 3-1, 3-2 and the output sections 6-1, 6-2 as shown in Fig. 1. The table according to Fig. 2, as well as the Figs. 3 to 6, are primarily intended for illustrating the principles of the resource management according to embodiments of the invention.

Via the interface 7 according to Fig. 1, the user may set particular resource management settings such as different priorities for the different signals 10-1 to 10-2. For example, signals 10-1 and 10-2 serve to transmit different broadcasted services, for example signal 10-1 may serve for broadcasting a TV program of a particular channel, whereas signal 10-2 serves to transmit information content such as EPG data or internet data. Via user interface 7, the user may set a first priority for receiving the TV program (signal 10-1), and may select a second priority for receiving the information data (signal 10-2). In other words, the user is interested in both services transmitted with signals 10-1 and 10-2 which are available at a certain place and at a certain time. The user has set different priorities for the different services in a way that the user prefers the TV program (signal 10-1), particularly a high quality reception of the TV program. In the second place, the user is also interested in the information transmitted with signal 10-2.

The processor 5 determines at least one parameter QR, such as signal power, for at least one of the first and second signals 10-1 and 10-2 indicative for its quality of reception. For example, the processor 5 determines the parameter QR for the first signal 10-1 and compares the parameter QR with a corresponding threshold value 15. In the event that the parameter QR determined for the signal 10-1, i. e. the parameter QR for the TV program, is greater than the threshold 15, the receiver 3-1 is tuned for receiving the TV program (signal 10-1), and the receiver 3-2 is tuned for receiving the information channel (signal 10-2). In other words, receiving the TV program with only one of the receivers is sufficient for a high quality reception of the TV program. On the other hand, in the event that the parameter QR determined for the signal 10-1 is lower than the threshold 15, and in the event that the priority of processing is set for preferring the signal 10-1, as in the present embodiment, both receivers 3-1 and 3-2 are tuned for receiving the signal 10-1. In this way, when only a low signal quality is available at a certain place and/or at a certain time, the system switches over to receiving only the TV program (signal 10-1) output via output section 6-1, whereas the information channel having a lower priority set by the user is switched off. This resource management scheme is shown in Fig. 2 in the first row of the table.

According to another embodiment, in the event that the priority of processing is set by the user for receiving only the TV program (signal 10-1), the processor 5 is adapted for tuning both receivers 3-1 and 3-2 for receiving the signal 10-1, regardless whether the parameter QR is higher or lower than the threshold 15. This is shown in the lower row of the table according to Fig. 2.

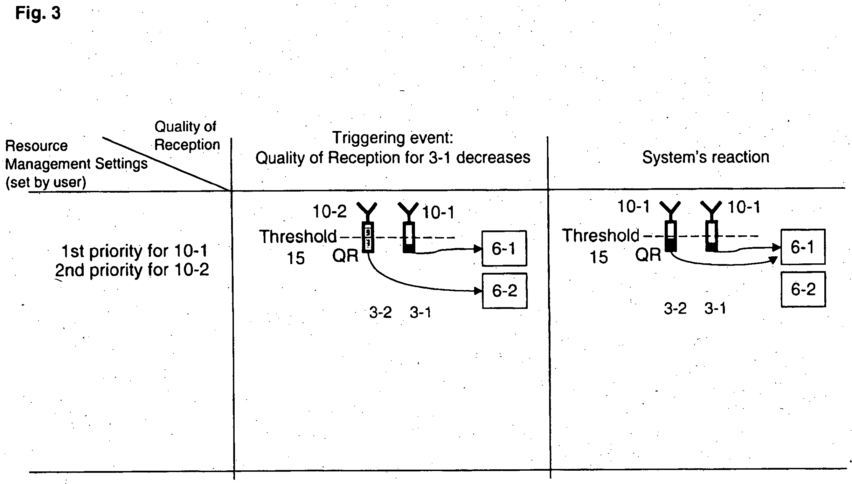

Fig. 3 shows another table illustrating another exemplary resource management scheme which may be implemented in a processor 5 according to the circuit of Fig. 1. In the scheme of Fig. 3, the priority settings by the user are the same as explained with reference to Fig. 2. In the scenario of Fig. 3, the signal qualities involved with the reception by the receivers 3-1 and 3-2 are different from each other. In the present case, it is supposed that the signal quality involved with the signal reception by receiver 3-2 is rather good, whereas the signal quality involved with the signal reception by the receiver 3-1 is rather low In the present case, the priority of processing, i. e. the higher first priority, is set by the user for preferring the signal 10-1 associated with the lower signal quality, so that the signal 10-1 is associated with the parameter QR which is lower than the threshold 15. In the present scenario, additionally another one of the receivers, in the present example the receiver 3-2, is tuned for receiving the signal 10-1 associated with the parameter QR which is lower than the threshold 15, so that both receivers 3-1 and 3-2 are tuned for receiving the higher priority signal 10-1 for outputting at output section 6-1 as shown. According to another embodiment, the receiver 3-2 may alternatively be tuned for receiving signal 10-1. In this way, the system is capable of improving the reception quality involved with the reception of the service associated with signal 10-1 according to current user's requirements even in a region and/or at a time when the quality of reception is generally rather low. On the other hand, when the quality of the reception is rather high, the system is capable of providing different services to the user using each one of the receivers for receiving a respective signal for providing the different services to the user.

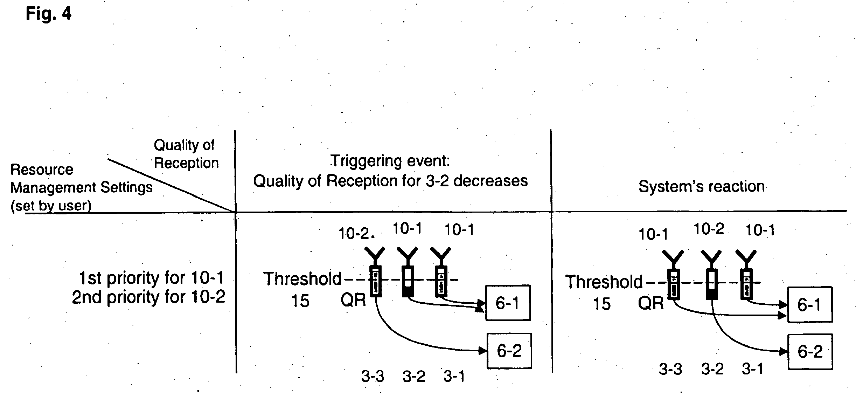

Fig. 4 shows a table illustrating another exemplary resource management scheme implemented in a system according to Fig. 1 which involves at least three receivers for receiving a respective broadcasted signal. Generally, referring to both Fig. 1 and 4, the system 1 may also include a third receiver 3-3 (or any other additional receiver) for receiving at least one of the broadcasted first and second signal 10-1, 10-2. For example, as shown in Fig. 4, left column, receivers 3-1 and 3-2 are tuned for receiving signal 10-1, whereas receiver 3-3 is tuned for receiving signal 10-2. For instance, receivers 3-1 and 3-2 serve to provide a TV program (signal 10-1) to output section 6-1, and receiver 3-3 serves to provide information data from a different broadcast channel (signal 10-2) to output section 6-2. As shown in Fig. 1, the processing unit 4, 5 is coupled between the first, second and third receivers 3-1, 3-2, 3-3 and the output unit 6, respectively, for processing either one or any combination of the received signals and for transmitting at least one processed signal to the output unit. The professing unit, particularly processor 5, is adapted for evaluating a signal quality of reception involved with the reception by any of the receivers 3-1 to 3-3, whereby determining the at least one parameter QR for at least one of the first and second signal 10-1 and 10-2 indicative for a quality of reception. Generally, the processing unit is adapted for tuning the receiver 3-1 for receiving the first signal 10-1 or second signal 10-2, for tuning the receiver 3-2 for receiving the first signal 10-1 or second signal 10-2, and for tuning the receiver 3-3 for receiving the first signal 10-1 or second signal 10-2 depending on the comparison with the threshold value 15 and depending on the user's priority setting set via user interface 7, as described above.

In the scenario shown in Fig. 4, the signal quality at receiver 3-2 receiving the signal 10-1 is rather low, wherein the priority for signal 10-1 (for example the TV program) is set to the first priority such as a priority for high quality reception. The resource management implemented in processor 5 switches receiver 3-2 for receiving the lower priority signal 10-2 (second priority indicating, e. g., a setting for lower quality reception), and tunes at least one or both of the other receivers 3-1, 3-3 for receiving the signal 10-1 associated with the high first priority, so that the service associated with signal 10-1, for example the TV program, may be output at output section 6-1 at a rather high quality.

Generally, the embodiment of the resource management scheme according to Fig. 4 involves the following general concept: in the event that the at least one parameter QR is lower than the at least one threshold 15, and in the event that the priority of processing is set for preferring the respective signal associated with the at least one parameter QR which is lower than the at least one threshold 15 (in the present example the priority is set for preferring the signal 10-1 associated with the low parameter QR), at least one of the other receivers (receiver 3-1 and/or 3-3) is tuned additionally, or alternatively for receiving the respective signal associated with the at least one parameter which is lower than the threshold, in the present example for receiving the signal 10-1 associated with the low parameter QR.

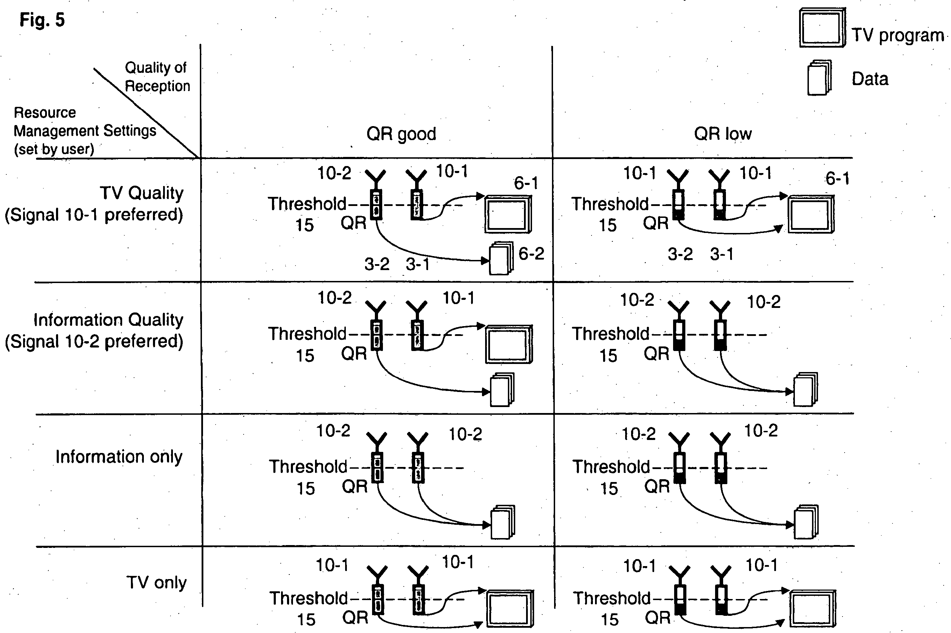

In Fig. 5 there is shown a table illustrating another exemplary resource management scheme implemented in a system according to Fig. 1 where the user may set different priorities for different signals. As shown in the first row of the table of Fig. 5, the user sets the priority on the TV quality, which means that signal 10-1 associated with the TV program is preferred. In the event that the parameter QR determined for the signal 10-1 is greater than the threshold 15, the receiver 3-1 is tuned for receiving the signal 10-1 for receiving the TV program, and receiver 3-2 is tuned for receiving the signal 10-2 for receiving another channel, for example information data. If the parameter QR for the signal 10-1 decreases below threshold 15, both receivers 3-1 and 3-2 are tuned for receiving the signal 10-1 having the higher priority. In other words, if the system determines that the signal quality for the TV program (signal 10-1) is below the threshold value 15, a further receiver is tuned to receiving the same signal, e. g., the same frequency and same service, in order to provide an additional source for providing the high priority service for achieving a better signal quality. For example, the outputs of each of the receivers 3-1 and 3-2 may be synthesized (added) in a corresponding synthesizing circuit, thus performing diversity reception.

According to the second row of the table according to Fig. 5, this scheme is analogously applied in the event that the higher priority is set for signal 10-2 used in this example for receiving information data, as described above. The last two rows in the table of Fig. 5 each illustrate scenarios in which both receivers 3-1 and 3-2 are tuned both to either the signal 10-1 or signal 10-2 independent from the parameter QR, but depending on whether the user wants to receive only the service associated with signal 10-1 or the service associated with signal 10-2.

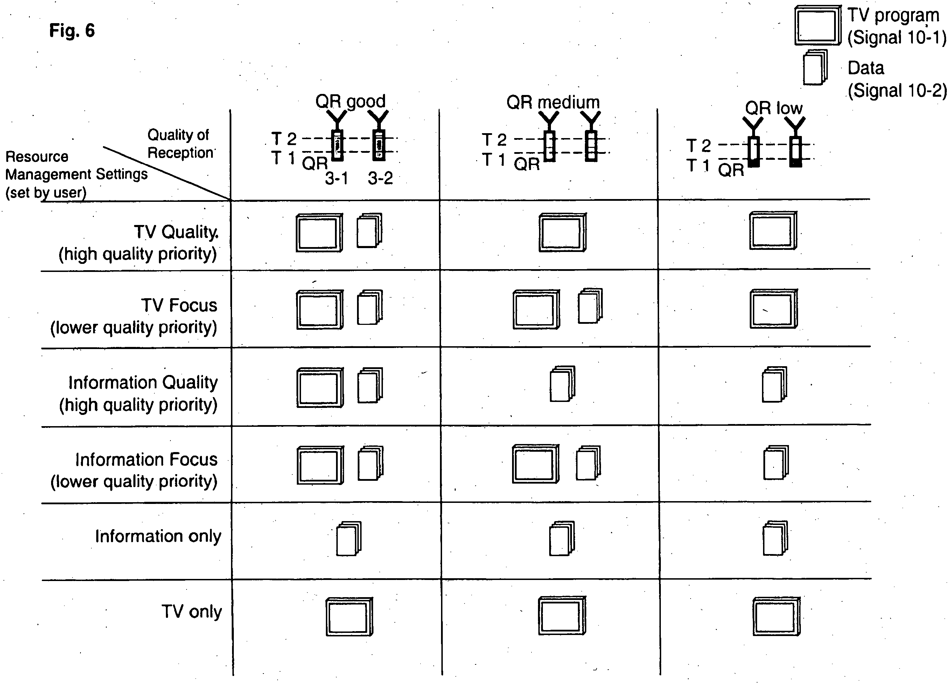

In Fig. 6, there is shown a table illustrating another exemplary resource management scheme which may be implemented in a system according to Fig. 1 and which involves at least two thresholds affecting the resource management. Particularly, with respect to the processor 5 according to Fig. 1, the processor is adapted for comparing the parameter QR associated with any one of the received signals with at least a first and a second threshold T1, T2, wherein the second threshold value T2 is greater than the first threshold value T1. In this way, a finer adjustment of the resource management may be achieved.

As illustrated in the left column of the table of Fig. 6, a scenario is shown according to which the parameter QR determined for any one of the signals 10-1, 10-2 is greater than the second threshold value T2. For example, in the event that the parameter QR determined for the signal 10-1 (TV program) is greater than the second threshold T2, the receiver 3-1 is tuned for receiving the signal 10-1 and the receiver 3-2 is tuned for receiving the signal 10-2, thus providing both services to the user. Therefore, in the present example the signal quality of the respective preferred signal is sufficiently well, so that one receiver is sufficient for providing the necessary signals at a good quality, whereas the other one of the receivers may be used for receiving another service, thus increasing the availability of different services.

On the other hand, as shown in the medium column of the table of Fig. 6, in the event that the parameter QR determined for the signal 10-1 is lower than the second threshold T2 but higher than the first threshold T1, and in the event that the priority of processing is set to a high quality priority for the signal 10-1 (TV program), the receiver 3-1 is tuned for receiving signal 10-1 and the receiver 3-2 is tuned for receiving also the signal 10-1. This is applied analogously for signal 10-2 in the event that the priority of processing is set to the high quality priority for the signal 10-2.

On the other hand, in the event that the priority of processing is set to a lower quality priority for the signal 10-1 ("TV focus", which means that the TV program is preferred but may also be received at a lower quality), the receiver 3-1 is tuned for receiving the signal 10-1 and the receiver 3-2 is tuned for receiving the signal 10-2, so that nevertheless different services may be provided to the user.

Therefore, the user may set the main focus on, for example, TV program or information data, and may additionally set which quality is regarded sufficient for receiving the respective service. According to the user's settings and according to the parameter QR for the respective signal, the system decides on its own how many receivers are employed for receiving the respective signal. Referring back to the particular embodiment of Fig. 1, the backend/decoder 4 may read the quality of the digital packets received from the de-modulators 32-1 to 32-n, and controls the de-modulators. The processor 5 reads the quality values from the de-modulators 32-1 to 32-n and the backend/decoder 4 and calculates the quality of reception (parameter QR) using these values. The processor 5 takes decisions as described above about the resource management and controls the associated components accordingly.

Returning to the table of Fig. 6, according to the right hand column a scenario is shown in which the quality of reception (parameter QR) is below the threshold value T1. For example, in the event that the parameter QR determined for the signal 10-1 is lower than the threshold T1, and in the event that the priority of processing is set to the high or lower quality priority for the signal 10-1, both receivers 3-1 and 3-2 are tuned for receiving the signal 10-1, thus increasing the output quality for the service associated with signal 10-1. This is applied analogously for signal 10-2 in the event that the priority of processing is set to the high or lower quality priority for the signal 10-2.

In the above embodiments, the resource management scheme according to the invention has been described particularly with reference to two or three receivers involved. However, the resource management scheme may be applied basically also in a system involving four or more receivers. For example, three or more receivers may be used, in principle, for receiving one signal having a low signal quality, or two receivers may be combined as one receiver unit always receiving a signal of a common frequency or broadcast channel, for example.

The system according to the present invention may be implemented, for example, in any mobile environment where the conditions of signal reception may vary with movement of the respective device. Therefore, the present invention may advantageously be implemented in an automotive environment such as a vehicle. However, the invention may also be implemented in a stationary system such as for home entertainment where signal conditions may change over time.

While the invention has been described with reference to exemplary embodiments, it will be understood by those skilled in the art that various changes may be made and equivalents may be substituted for elements thereof without departing from the scope of the claims. Therefore, it is intended that the invention will not be limited to the particular embodiments disclosed, but that the invention will include all embodiments falling within the scope of the appended claims.

## Claims

1. A system (1) for receiving and processing broadcasted signals, comprising:
- a first receiver (3-1) for receiving at least a broadcasted first signal (10-1) and a second receiver (3-2) for receiving at least a broadcasted second signal (10-2), the first and second receiver including a respective tuner (31-1,31-2),
- an output unit (6) for outputting at least one output signal,
- a processing unit (4, 5) coupled between the first and second receivers and the output unit, respectively, for processing either one or both of the first and second signals (10-1, 10-2) and for transmitting at least one processed signal to the output unit,
- a user interface (7) coupled with the processing unit (4, 5) and adapted for receiving user's instructions as to setting a priority of processing of the first signal (10-1) or the second signal (10-2),
- wherein the processing unit (4, 5) is adapted for evaluating a signal quality of reception involved with the reception by any of the receivers (3-1, 3-2), thereby determining at least one parameter (QR) for at least one of the first and second signal indicative for its quality of reception, and for comparing the at least one parameter (QR) with at least one preset threshold value (15),
- wherein the processing unit (4, 5) is further adapted for tuning the first receiver (3-1) for receiving the first or second signal (10-1, 10-2) and for tuning the second receiver (3-2) for receiving the first or second signal (10-1, 10-2) depending on the comparison and the user's priority setting, wherein in the event that the at least one parameter (QR) is lower than the at least one threshold (15), and in the event that the priority of processing is set for preferring the respective first or second signal (10-1) which is associated with the at least one parameter which is lower than the at least one threshold (15), tuning additionally or alternatively another one of the receivers (3-2) for receiving the respective signal (10-1) associated with the at least one parameter which is lower than the at least one threshold (15).

2. The system according to claim 1, wherein
the at least one parameter (QR) is at least one of a signal power, signal to noise ratio, error bit rate, and packet error rate derived from the first and second signal (10-1, 10-2), respectively.

3. The system according to claim 1 or 2, wherein
the processing unit (4, 5) is adapted for performing the steps of:
- in the event that the at least one parameter (QR) determined for the first signal (10-1) is greater than the at least one threshold (15), tuning the first receiver (3-1) for receiving the first signal (10-1) and tuning the second receiver (3-2) for receiving the second signal (10-2),
- in the event that the at least one parameter (QR) determined for the first signal (10-1) is lower than the at least one threshold (15), and in the event that the priority of processing is set for preferring the first signal (10-1), tuning the first receiver (3-1) for receiving the first signal (10-1) and tuning the second receiver (3-2) for receiving the first signal (10-1).

4. The system according to one of claims 1 to 3, wherein
the processing unit (4, 5) is adapted for tuning the first receiver (3-1) for receiving the first signal (10-1) and tuning the second receiver (3-2) for receiving the first signal (10-1) in the event that the priority of processing is set for receiving only the first signal (10-1).

5. The system according to one of claims 1 to 4, further comprising:
- a third receiver (3-3) for receiving at least one of the broadcasted first and second signal (10-1, 10-2),
- the processing unit (4, 5) coupled between the first, second and third receivers (3-1, 3-2, 3-3) and the output unit (6), respectively, for processing either one or any combination of the received signals and for transmitting at least one processed signal to the output unit (6),
- wherein the processing unit (4, 5) is adapted for evaluating a signal quality of reception involved with the reception by any of the receivers (3-1, 3-2, 3-3), thereby determining the at least one parameter (QR) for at least one of the first and second signal indicative for its quality of reception,
- wherein the processing unit (4, 5) is further adapted for tuning the first receiver (3-1) for receiving the first or second signal, for tuning the second receiver (3-2) for receiving the first or second signal, and for tuning the third receiver (3-3) for receiving the first or second signal depending on the comparison and the user's priority setting.

6. The system according to claim 5, wherein
the processing unit (4, 5) is further adapted for performing the step of:
in the event that the at least one parameter (QR) is lower than the at least one threshold (15), and in the event that the priority of processing is set for preferring the respective signal (10-1) associated with the at least one parameter which is lower than the at least one threshold (15), tuning additionally or alternatively at least one of the other receivers (3-1, 3-3) for receiving the respective signal (10-1) associated with the at least one parameter which is lower than the at least one threshold (15).

7. The system according to one of claims 1 to 6, wherein
the processing unit (4, 5) is adapted for comparing the at least one parameter (QR) with at least a first and a second threshold value (T1, T2), the second threshold value (T2) being greater than the first threshold value (T1).

8. The system according to claim 7, wherein
the processing unit (4, 5) is further adapted for performing the step of:
in the event that the at least one parameter (QR) determined for the first signal (10-1) is greater than the second threshold (T2), and in the event that the priority of processing is set for preferring the first signal (10-1), tuning the first receiver (3-1) for receiving the first signal (10-1) and tuning the second receiver (3-2) for receiving the second signal (10-2).

9. The system according to claim 7 or 8, wherein
the processing unit (4, 5) is further adapted for performing the step of:
in the event that the at least one parameter (QR) determined for the first signal (10-1) is lower than the second threshold (T2) but higher than the first threshold (T1), and in the event that the priority of processing is set to a high quality priority for the first signal (10-1), tuning the first receiver (3-1) for receiving the first signal (10-1) and tuning the second receiver (3-2) for receiving the first signal (10-1).

10. The system according to claim 9, wherein
the processing unit (4, 5) is further adapted for performing the step of:
in the event that the priority of processing is set to a lower quality priority for the first signal (10-1), tuning the first receiver (3-1) for receiving the first signal (10-1) and tuning the second receiver (3-2) for receiving the second signal (10-2).

11. The system according to one of claims 9 or 10, wherein
the processing unit (4, 5) is further adapted for performing the step of:
in the event that the at least one parameter (QR) determined for the first signal (10-1) is lower than the first threshold (T1), and in the event that the priority of processing is set to the high or lower quality priority for the first signal (10-1),
tuning the first receiver (3-1) for receiving the first signal (10-1) and tuning the second receiver (3-2) for receiving the first signal (10-1).

12. The system according to one of claims 1 to 11, wherein
the system (1) is implemented in a mobile environment, particularly in an automotive environment.

13. A method for receiving and processing broadcasted signals, comprising the steps of:
- providing a first receiver (3-1) for receiving at least a broadcasted first signal (10-1) and providing a second receiver (3-2) for receiving at least a broadcasted second signal (10-2), the first and second receiver including a respective tuner (31-1,31-2),
- outputting at least one output signal at an output unit (6),
- processing either one or both of the first and second signals (10-1, 10-2) and transmitting at least one processed signal to the output unit,
- receiving user's instructions as to setting a priority of processing of the first signal (10-1) or the second signal (10-2),
- evaluating a signal quality of reception involved with the reception by any of the receivers (3-1, 3-2), thereby determining at least one parameter (QR) for at least one of the first and second signal indicative for its quality of reception, and comparing the at least one parameter (QR) with at least one preset threshold value (15),
- tuning the first receiver (3-1) for receiving the first or second signal (10-1, 10-2) and tuning the second receiver (3-2) for receiving the first or second signal (10-1, 10-2) depending on the comparison and the user's priority setting, wherein in the event that the at least one parameter (QR) is lower than the at least one threshold (15), and in the event that the priority of processing is set for preferring the respective first or second signal (10-1) which is associated with the at least one parameter which is lower than the at least one threshold (15), tuning additionally or alternatively another one of the receivers (3-2) for receiving the respective signal (10-1) associated with the at least one parameter which is lower than the at least one threshold (15).

## Patentansprüche

1. System (1) zum Empfangen und Verarbeiten von Rundfunksignalen, aufweisend:
- einen ersten Empfänger (3-1) zum Empfangen mindestens eines ersten Rundfunksignals (10-1) und einen zweiten Empfänger (3-2) zum Empfangen mindestens eines zweiten Rundfunksignals (10-2), wobei der erste und der zweite Empfänger jeweils einen Tuner (31-1, 31-2) aufweisen,
- eine Ausgabeeinheit (6) zum Ausgeben mindestens eines Ausgangssignals,
- eine zwischen den ersten und den zweiten Empfänger und die Ausgabeeinheit gekoppelte Verarbeitungseinheit (4, 5) zum Verarbeiten eines oder beider des ersten und des zweiten Signals (10-1, 10-2) und zum Übertragen mindestens eines verarbeiteten Signals an die Ausgabeeinheit,
- eine Benutzerschnittstelle (7), die mit der Verarbeitungseinheit (4, 5) gekoppelt und dafür ausgebildet ist, Benutzeranweisungen zur Festlegung der Verarbeitungspriorität des ersten Signals (10-1) oder des zweiten Signals (10-2) zu empfangen,
- wobei die Verarbeitungseinheit (4, 5) dafür ausgebildet ist, eine Signalempfangsqualität in Verbindung mit dem Empfang durch einen der Empfänger (3-1, 3-2) auszuwerten, wodurch mindestens ein Parameter (QR) für mindestens eines des ersten und des zweiten Signals bestimmt wird, der indikativ für deren Empfangsqualität ist, und den mindestens einen Parameter (QR) mit mindestens einem vorfestgelegten Schwellenwert (15) zu vergleichen,
- wobei die Verarbeitungseinheit (4, 5) ferner dafür ausgebildet ist, in Abhängigkeit von dem Vergleich und der Prioritätsfestlegung des Benutzers den ersten Empfänger (3-1) auf den Empfang des ersten oder zweiten Signals (10-1, 10-2) einzustellen und den zweiten Empfänger (3-2) auf den Empfang des ersten oder des zweiten Signals (10-1, 10-2) einzustellen, wobei, wenn der mindestens eine Parameter (QR) kleiner ist als der mindestens eine Schwellenwert (15) und wenn die Verarbeitungspriorität derart festgelegt ist, dass das erste bzw. das zweite Signal (10-1), das dem mindestens einen Parameter zugeordnet ist, der kleiner ist als der mindestens eine Schwellenwert (15), bevorzugt wird, zusätzlich oder alternativ ein anderer der Empfänger (3-2) auf den Empfang des entsprechenden Signals (10-1), das dem mindestens einen Parameter zugeordnet ist, der kleiner ist als der mindestens eine Schwellenwert (15), eingestellt wird.

2. System nach Anspruch 1, wobei
der mindestens eine Parameter (QR) mindestens einer der folgenden ist: Signalleistung, Signal-Rausch-Verhältnis, Fehlerbitrate und von dem ersten bzw. dem zweiten Signal (10-1, 10-2) abgeleitete Paketfehlerrate.

3. System nach Anspruch 1 oder 2, wobei
die Verarbeitungseinheit (4, 5) dafür ausgebildet ist, folgende Schritte auszuführen:
- wenn der mindestens eine Parameter (QR), der für das erste Signal (10-1) bestimmt wird, größer ist als der mindestens eine Schwellenwert (15), Einstellen des ersten Empfängers (3-1) auf den Empfang des ersten Signals (10-1) und Einstellen des zweiten Empfängers (3-2) auf den Empfang des zweiten Signals (10-2),
- wenn der mindestens eine Parameter (QR), der für das erste Signal (10-1) bestimmt wird, kleiner ist als der mindestens eine Schwellenwert (15) und wenn die Verarbeitungspriorität derart festgelegt ist, dass das erste Signal (10-1) bevorzugt wird, Einstellen des ersten Empfängers (3-1) auf den Empfang des ersten Signals (10-1) und Einstellen des zweiten Empfängers (3-2) auf den Empfang des ersten Signals (10-1).

4. System nach einem der Ansprüche 1 bis 3, wobei
die Verarbeitungseinheit (4, 5) dafür ausgebildet ist, den ersten Empfänger (3-1) auf den Empfang des ersten Signals (10-1) einzustellen und den zweiten Empfänger (3-2) auf den Empfang des ersten Signals (10-1) einzustellen, wenn die Verarbeitungspriorität auf den Empfang des ersten Signals (10-1) festgelegt ist.

5. System nach einem der Ansprüche 1 bis 4, ferner aufweisend:
- einen dritten Empfänger (3-3) zum Empfangen mindestens eines des ersten und des zweiten Rundfunksignals (10-1, 10-2),
- die zwischen den ersten, zweiten und dritten Empfänger (3-1, 3-2, 3-3) und die Ausgabeeinheit (6) gekoppelte Verarbeitungseinheit (4, 5) zum Verarbeiten entweder eines oder jeglicher Kombination der empfangenen Signale und zum Übertragen mindestens eines verarbeiteten Signals an die Ausgabeeinheit (6),
- wobei die Verarbeitungseinheit (4, 5) dafür ausgebildet ist, eine Signalempfangsqualität in Verbindung mit dem Empfang durch einen der Empfänger (3-1, 3-2, 3-3) auszuwerten, wodurch der mindestens eine Parameter (QR) für mindestens eines des ersten und des zweiten Signals bestimmt wird, der indikativ für deren Empfangsqualität ist,
- wobei die Verarbeitungseinheit (4, 5) ferner dafür ausgebildet ist, in Abhängigkeit von dem Vergleich und der Prioritätsfestlegung des Benutzers den ersten Empfänger (3-1) auf den Empfang des ersten oder zweiten Signals einzustellen, den zweiten Empfänger (3-2) auf den Empfang des ersten oder des zweiten Signals einzustellen und den dritten Empfänger (3-3) auf den Empfang des ersten oder zweiten Signals einzustellen.

6. System nach Anspruch 5, wobei
die Verarbeitungseinheit (4, 5) ferner dafür ausgebildet ist, folgenden Schritt auszuführen:
- wenn der mindestens eine Parameter (QR) kleiner ist als der mindestens eine Schwellenwert (15) und wenn die Verarbeitungspriorität derart festgelegt ist, dass das jeweilige Signal (10-1) bevorzugt wird, das dem mindestens einen Parameter zugeordnet ist, der kleiner ist als der mindestens eine Schwellenwert (15), zusätzlich oder alternativ Einstellen mindestens eines der anderen Empfänger (3-1, 3-3) auf den Empfang des jeweiligen Signals (10-1), das dem mindestens einen Parameter zugeordnet ist, der kleiner ist als der mindestens eine Schwellenwert (15).

7. System nach einem der Ansprüche 1 bis 6, wobei
die Verarbeitungseinheit (4, 5) dafür ausgebildet ist, den mindestens einen Parameter (QR) mit mindestens einem ersten und einem zweiten Schwellenwert (T1, T2) zu vergleichen, wobei der zweite Schwellenwert (T2) größer ist als der erste Schwellenwert (T1).

8. System nach Anspruch 7, wobei
die Verarbeitungseinheit (4, 5) ferner dafür ausgebildet ist, folgenden Schritt auszuführen:
wenn der mindestens eine Parameter (QR) ist, der für das erste Signal (10-1) bestimmt wird, größer ist als der zweite Schwellenwert (T2) und wenn die Verarbeitungspriorität derart festgelegt ist, dass das erste Signal (10-1) bevorzugt wird, Einstellen des ersten Empfängers (3-1) auf den Empfang des ersten Signals (10-1) und Einstellen des zweiten Empfängers (3-2) auf den Empfang des zweiten Signals (10-2).

9. System nach einem der Ansprüche 7 oder 8,
wobei die Verarbeitungseinheit (4, 5) ferner dafür ausgebildet ist, folgenden Schritt auszuführen:
wenn der mindestens eine Parameter (QR), der für das erste Signal (10-1) bestimmt wird, kleiner als der zweite Schwellenwert (T2), aber höher als der erste Schwellenwert (T1) ist und wenn die Verarbeitungspriorität auf eine Priorität hoher Qualität für das erste Signal (10-1) festgelegt ist, Einstellen des ersten Empfängers (3-1) auf den Empfang des ersten Signals (10-1) und Einstellen des zweiten Empfängers (3-2) auf den Empfang des ersten Signals (10-1).

10. System nach Anspruch 9, wobei
die Verarbeitungseinheit (4, 5) ferner dafür ausgebildet ist, folgenden Schritt auszuführen:
wenn die Verarbeitungspriorität auf eine Priorität geringerer Qualität für das erste Signal (10-1) festgelegt ist, Einstellen des ersten Empfängers (3-1) auf den Empfang des ersten Signals (10-1) und Einstellen des zweiten Empfängers (3-2) auf den Empfang des zweiten Signals (10-2).

11. System nach einem der Ansprüche 9 oder 10, wobei
die Verarbeitungseinheit (4, 5) ferner dafür ausgebildet ist, folgenden Schritt auszuführen:
wenn der mindestens eine Parameter (QR), der für das erste Signal (10-1) bestimmt wird, kleiner ist als der erste Schwellenwert (T1) und
wenn die Verarbeitungspriorität auf die Priorität hoher oder geringerer Qualität für das erste Signal (10-1) festgelegt ist, Einstellen des ersten Empfängers (3-1) auf den Empfang des ersten Signals (10-1) und Einstellen des zweiten Empfängers (3-2) auf den Empfang des ersten Signals (10-1).

12. System nach einem der Ansprüche 1 bis 11, wobei
das System (1) in einer mobilen Umgebung umgesetzt ist, insbesondere in einer Automobilumgebung.

13. Verfahren zum Empfangen und Verarbeiten von Rundfunksignalen, das folgende Schritte beinhaltet:
- Bereitstellen eines ersten Empfängers (3-1) zum Empfangen mindestens eines ersten Rundfunksignals (10-1) und Bereitstellen eines zweiten Empfängers (3-2) zum Empfangen mindestens eines zweiten Rundfunksignals (10-2), wobei der erste und der zweite Empfänger jeweils einen Tuner (31-1, 31-2) aufweisen,
- Ausgeben mindestens eines Ausgangssignals an einer Ausgabeeinheit (6),
- Verarbeiten eines oder beider des ersten und des zweiten Signals (10-1, 10-2) und Übertragen mindestens eines verarbeiteten Signals an die Ausgabeeinheit,
- Empfangen von Benutzeranweisungen, um eine Verarbeitungspriorität des ersten Signals (10-1) oder des zweiten Signals (10-2) festzulegen,
- Auswerten einer Signalempfangsqualität in Verbindung mit dem Empfang durch einen der Empfänger (3-1, 3-2), wodurch mindestens ein Parameter (QR) für mindestens eines des ersten und des zweiten Signals bestimmt wird, der indikativ für die Empfangsqualität ist, und Vergleichen des mindestens einen Parameters (QR) mit mindestens einem voreingestellten Schwellenwert (15),
- Einstellen des ersten Empfängers (3-1) auf den Empfang des ersten oder zweiten Signals (10-1, 10-2) und Einstellen des zweiten Empfängers (3-2) auf den Empfang des ersten oder des zweiten Signals (10-1, 10-2) in Abhängigkeit von dem Vergleich und der Prioritätsfestlegung des Benutzers, wobei, wenn der mindestens eine Parameter (QR) kleiner ist als der mindestens eine Schwellenwert (15) und wenn die Verarbeitungspriorität derart festgelegt ist, dass das erste bzw. das zweite Signal (10-1) bevorzugt wird, das dem mindestens einen Parameter zugeordnet ist, der kleiner ist als der mindestens eine Schwellenwert (15), zusätzlich oder alternativ Einstellen eines anderen der Empfänger (3-2) auf den Empfang des entsprechenden Signals (10-1), das dem mindestens einen Parameter zugeordnet ist, der kleiner ist als der mindestens eine Schwellenwert (15).

## Revendications

1. Système (1) de réception et de traitement de signaux diffusés, comprenant :
- un premier récepteur (3-1) pour recevoir au moins un premier signal diffusé (10-1) et un deuxième récepteur (3-2) pour recevoir au moins un deuxième signal diffusé (10-2), les premier et deuxième récepteurs comprenant un syntoniseur respectif (31-1, 31-2),
- une unité de sortie (6) pour délivrer au moins un signal de sortie,
- une unité de traitement (4, 5) couplée entre les premier et deuxième récepteurs et l'unité de sortie, respectivement, pour traiter soit l'un des premier et deuxième signaux (10-1, 10-2) soit les deux, et pour envoyer au moins un signal traité à l'unité de sortie,
- une interface utilisateur (7) couplée à l'unité de traitement (4, 5) et conçue pour recevoir des instructions de l'utilisateur concernant le réglage d'une priorité de traitement du premier signal (10-1) ou du deuxième signal (10-2),
- dans lequel l'unité de traitement (4, 5) est conçue pour évaluer une qualité de réception de signal offerte par la réception par n'importe lequel des récepteurs (3-1, 3-2), déterminant par ce moyen au moins un paramètre (QR) pour au moins un des premier et deuxième signaux indicatif de sa qualité de réception, et pour comparer l'au moins un paramètre (QR) à au moins une valeur seuil prédéfinie (15),
- dans lequel l'unité de traitement (4, 5) est en outre conçue pour syntoniser le premier récepteur (3-1) pour recevoir le premier ou deuxième signal (10-1, 10-2) et pour syntoniser le deuxième récepteur (3-2) pour recevoir le premier ou deuxième signal (10-1, 10-2) en fonction de la comparaison et du réglage de priorité effectué par l'utilisateur, ce qui consiste, dans le cas où l'au moins un paramètre (QR) est inférieur à l'au moins un seuil (15), et dans le cas où la priorité de traitement est réglée pour préférer le premier ou deuxième signal respectif (10-1) qui est associé à l'au moins un paramètre qui est inférieur à l'au moins un seuil (15), à syntoniser en plus ou à la place un autre des récepteurs (3-2) pour recevoir le signal respectif (10-1) associé à l'au moins un paramètre qui est inférieur à l'au moins un seuil (15).

2. Système selon la revendication 1, dans lequel
l'au moins un paramètre (QR) est au moins un paramètre parmi une puissance de signal, un rapport signal sur bruit, un taux d'erreurs sur les bits et un taux d'erreurs sur les paquets calculés à partir des premier et deuxième signaux (10-1, 10-2), respectivement.

3. Système selon la revendication 1 ou 2, dans lequel
l'unité de traitement (4, 5) est conçue pour exécuter les étapes consistant à :
- dans le cas où l'au moins un paramètre (QR) déterminé pour le premier signal (10-1) est supérieur à l'au moins un seuil (15), syntoniser le premier récepteur (3-1) pour recevoir le premier signal (10-1) et syntoniser le deuxième récepteur (3-2) pour recevoir le deuxième signal (10-2),
- dans le cas où l'au moins un paramètre (QR) déterminé pour le premier signal (10-1) est inférieur à l'au moins un seuil (15), et dans le cas où la priorité de traitement est réglée pour préférer le premier signal (10-1), syntoniser le premier récepteur (3-1) pour recevoir le premier signal (10-1) et syntoniser le deuxième récepteur (3-2) pour recevoir le premier signal (10-1).

4. Système selon l'une des revendications 1 à 3, dans lequel
l'unité de traitement (4, 5) est conçue pour syntoniser le premier récepteur (3-1) pour recevoir le premier signal (10-1) et syntoniser le deuxième récepteur (3-2) pour recevoir le premier signal (10-1) dans le cas où la priorité de traitement est réglée pour recevoir seulement le premier signal (10-1).

5. Système selon l'une quelconque des revendications 1 à 4, comprenant en outre :
- un troisième récepteur (3-3) pour recevoir au moins un des premier et deuxième signaux diffusés (10-1, 10-2),
- l'unité de traitement (4, 5) couplée entre les premier, deuxième et troisième récepteurs (3-1, 3-2, 3-3) et l'unité de sortie (6), respectivement, pour traiter soit l'un soit n'importe quelle combinaison des signaux reçus et pour envoyer au moins un signal traité à l'unité de sortie (6),
- dans lequel l'unité de traitement (4, 5) est conçue pour évaluer une qualité de réception de signal offerte par la réception par n'importe lequel des récepteurs (3-1, 3-2, 3-3), déterminant par ce moyen l'au moins un paramètre (QR) pour au moins un des premier et deuxième signaux indicatif de sa qualité de réception,
- dans lequel l'unité de traitement (4, 5) est en outre conçue pour syntoniser le premier récepteur (3-1) pour recevoir le premier ou deuxième signal, pour syntoniser le deuxième récepteur (3-2) pour recevoir le premier ou deuxième signal, et pour syntoniser le troisième récepteur (3-3) pour recevoir le premier ou deuxième signal en fonction de la comparaison et du réglage de priorité effectué par l'utilisateur.

6. Système selon la revendication 5, dans lequel
l'unité de traitement (4, 5) est en outre conçue pour exécuter l'étape consistant à :
dans le cas où l'au moins un paramètre (QR) est inférieur à l'au moins un seuil (15), et dans le cas où la priorité de traitement est réglée pour préférer le signal respectif (10-1) associé à l'au moins un paramètre qui est inférieur à l'au moins un seuil (15), syntoniser en plus ou à la place au moins un des autres récepteurs (3-1, 3-3) pour recevoir le signal respectif (10-1) associé à l'au moins un paramètre qui est inférieur à l'au moins un seuil (15).

7. Système selon l'une des revendications 1 à 6, dans lequel
l'unité de traitement (4, 5) est conçue pour comparer l'au moins un paramètre (QR) à au moins des première et deuxième valeurs seuils (T1, T2), la deuxième valeur seuil (T2) étant supérieure à la première valeur seuil (T1).

8. Système selon la revendication 7, dans lequel
l'unité de traitement (4, 5) est en outre conçue pour exécuter l'étape consistant à :
dans le cas où l'au moins un paramètre (QR) déterminé pour le premier signal (10-1) est supérieur au deuxième seuil (T2), et dans le cas où la priorité de traitement est réglée pour préférer le premier signal (10-1), syntoniser le premier récepteur (3-1) pour recevoir le premier signal (10-1) et syntoniser le deuxième récepteur (3-2) pour recevoir le deuxième signal (10-2).

9. Système selon la revendication 7 ou 8, dans lequel
l'unité de traitement (4, 5) est en outre conçue pour exécuter l'étape consistant à :
dans le cas où l'au moins un paramètre (QR) déterminé pour le premier signal (10-1) est inférieur au deuxième seuil (T2) mais supérieur au premier seuil (T1), et dans le cas où la priorité de traitement est réglée à une priorité de haute qualité pour le premier signal (10-1), syntoniser le premier récepteur (3-1) pour recevoir le premier signal (10-1) et syntoniser le deuxième récepteur (3-2) pour recevoir le premier signal (10-1).

10. Système selon la revendication 9, dans lequel
l'unité de traitement (4, 5) est en outre conçue pour exécuter l'étape consistant à :
dans le cas où la priorité de traitement est réglée à une priorité de plus basse qualité pour le premier signal (10-1), syntoniser le premier récepteur (3-1) pour recevoir le premier signal (10-1) et syntoniser le deuxième récepteur (3-2) pour recevoir le deuxième signal (10-2).

11. Système selon l'une des revendications 9 et 10, dans lequel
l'unité de traitement (4, 5) est en outre conçue pour exécuter l'étape consistant à :
dans le cas où l'au moins un paramètre (QR) déterminé pour le premier signal (10-1) est inférieur au premier seuil (T1), et dans le cas où la priorité de traitement est réglée à la priorité de haute ou de plus basse qualité pour le premier signal (10-1), syntoniser le premier récepteur (3-1) pour recevoir le premier signal (10-1) et syntoniser le deuxième récepteur (3-2) pour recevoir le premier signal (10-1).

12. Système selon l'une quelconque des revendications 1 à 11, dans lequel
le système (1) est mis en oeuvre dans un environnement mobile, en particulier dans un environnement automobile.

13. Procédé de réception et de traitement de signaux diffusés, comprenant les étapes consistant à :
- fournir un premier récepteur (3-1) pour recevoir au moins un premier signal diffusé (10-1) et fournir un deuxième récepteur (3-2) pour recevoir au moins un deuxième signal diffusé (10-2), les premier et deuxième récepteurs comprenant un syntoniseur respectif (31-1, 31-2),
- délivrer au moins un signal de sortie au niveau d'une unité de sortie (6),
- traiter soit l'un des premier et deuxième signaux (10-1, 10-2) soit les deux, et envoyer au moins un signal traité à l'unité de sortie,
- recevoir des instructions de l'utilisateur concernant le réglage d'une priorité de traitement du premier signal (10-1) ou du deuxième signal (10-2),
- évaluer une qualité de réception de signal offerte par la réception par n'importe lequel des récepteurs (3-1, 3-2), déterminant par ce moyen au moins un paramètre (QR) pour au moins un des premier et deuxième signaux indicatif de sa qualité de réception, et comparer l'au moins un paramètre (QR) à au moins une valeur seuil prédéfinie (15),
- syntoniser le premier récepteur (3-1) pour recevoir le premier ou deuxième signal (10-1, 10-2) et syntoniser le deuxième récepteur (3-2) pour recevoir le premier ou deuxième signal (10-1, 10-2) en fonction de la comparaison et du réglage de priorité effectué par l'utilisateur, ce qui consiste, dans le cas où l'au moins un paramètre (QR) est inférieur à l'au moins un seuil (15), et dans le cas où la priorité de traitement est réglée pour préférer le premier ou deuxième signal respectif (10-1) qui est associé à l'au moins un paramètre qui est inférieur à l'au moins un seuil (15), à syntoniser en plus ou à la place un autre des récepteurs (3-2) pour recevoir le signal respectif (10-1) associé à l'au moins un paramètre qui est inférieur à l'au moins un seuil (15).
